Europäisches Patentamt

European Patent Office

Office européen des brevets

(19)

(11) Numéro de publication : **0 066 511**
**B1**

(12) **FASCICULE DE BREVET EUROPÉEN**

(45) Date de publication du fascicule du brevet :
**07.11.84**

(51) Int. Cl.³ : **H 04 N   5/21**

(21) Numéro de dépôt : **82400953.4**

(22) Date de dépôt : **24.05.82**

(54) **Dispositif correcteur d'un signal vidéofréquence de télévision par atténuation dynamique du niveau du bruit, et source d'images de télévision comportant un tel dispositif.**

(30) Priorité : **27.05.81 FR 8110562**

(43) Date de publication de la demande :
**08.12.82 Bulletin 82/49**

(45) Mention de la délivrance du brevet :
**07.11.84 Bulletin 84/45**

(84) Etats contractants désignés :
**DE GB NL**

(56) Documents cités :
**FR-A- 2 188 381**
**FR-A- 2 219 590**
**US-A- 4 009 334**
**US-A- 4 031 547**

(73) Titulaire : **THOMSON-CSF**
**173, Boulevard Haussmann**
**F-75379 Paris Cedex 08 (FR)**

(72) Inventeur : **Lacoste, Jean-Pierre**
**THOMSON-CSF SCPI 173, bld Haussmann**
**F-75379 Paris Cedex 08 (FR)**

(74) Mandataire : **Lincot, Georges et al**
**THOMSON-CSF SCPI 173, Bld Haussmann**
**F-75379 Paris Cedex 08 (FR)**

EP 0 066 511 B1

## Description

L'invention concerne un dispositif correcteur de signaux vidéofréquences tel que ceux qui équipent les caméras de télévision. Ces dispositifs compensent la non-linéarité de la caractéristique amplitude-fréquence des tubes analyseurs sans augmenter, dans le signal vidéo, le niveau de bruit issu des préamplificateurs.

Un tel dispositif comporte généralement pour le dosage des contours un filtre passe bas élaborant à partir du signal initial, un signal filtré débarrassé des composantes hautes fréquences et des composantes de bruit. Un circuit de différence élabore un signal de contours par soustraction du signal filtré au signal initial. L'addition dans un circuit d'addition du signal filtré et du signal de contours, convenablement dosé, donne un signal reconstitué correspondant au signal initial corrigé. Avant élaboration du signal reconstitué, le signal de contours est traité pour diminuer le bruit par un écrêteur à seuil. Pour cela, les composantes de bruit, de valeur moyenne nulle sur les plages uniformes, ne sont pas transmises si les valeurs de crête ne dépassent pas la valeur de seuil. Par contre, le signal de contours, dont les valeurs instantanées sont supérieures à la valeur de seuil, est transmis et intervient débarrassé d'une partie des composantes de bruit, dans le signal reconstitué.

Ce dispositif permet de résoudre le problème mais seulement dans le cas d'une pollution de bruit constante et relativement peu importante. En effet, les crêtes de bruit dépassant le seuil d'écrêtage qui apparaissent lorsque le gain augmente, ne peuvent pas être corrigées par un tel circuit. De plus, le seuil doit être assez faible pour que les signaux de contours de faible amplitude soient conservés. D'autre part, les plages à forte luminance sont corrigées en bruit d'une façon équivalente aux plages sombres, ce qui n'est pas souhaitable pour des signaux devant subir les corrections non linéaires dites de « gamma » servant à compenser la réponse tension-lumière des tubes cathodiques.

La présente invention a pour but de remédier à ces inconvénients. A cet effet, le dispositif comporte un multiplicateur analogique de signaux réalisant une atténuation dynamique du niveau de bruit sur le signal de contours en modulant celui-ci en fonction du niveau du signal vidéofréquence.

Selon l'invention, un dispositif correcteur d'un signal vidéofréquence de télévision par atténuation dynamique du niveau de bruit, comportant un filtre éliminant les composantes hautes fréquences et les composantes de bruit du signal initial pour former un signal filtré, un circuit de différence élaborant un signal de contours par soustraction du signal filtré au signal initial, un circuit d'addition du signal filtré et d'un signal de contours traité pour former un signal reconstitué corrigé, est principalement caractérisé en ce que le signal de contours, est appliqué à l'entrée de signal d'un dispositif d'atténuation dynamique de bruit comportant une entrée de signal filtré reliée à la sortie du filtre, ce circuit délivrant sur sa sortie un signal traité en bruit par atténuation variable avec le niveau du signal vidéofréquence filtré entre une atténuation maximale réglable pour un niveau privilégié où le bruit peut être supprimé et une atténuation minimale lorsque le niveau de luminance du signal vidéofréquence atteint une amplitude maximum déterminée.

Les avantages de ce dispositif sont l'atténuation très importante du bruit sur un niveau de luminance privilégié qui peut être le niveau correspondant aux zones sombres de l'image, le coefficient d'atténuation du bruit étant indépendant du niveau de bruit mais variable en fonction du niveau vidéofréquence et pouvant être ajusté par l'exploitant.

L'invention a également pour objet une source d'images comportant un tel dispositif correcteur.

L'invention sera mieux comprise et d'autres caractéristiques apparaîtront à l'aide de la description qui suit, en référence aux figures annexées.

La figure 1 représente le dispositif correcteur selon l'invention ;

la figure 2 représente un premier mode de réalisation du dispositif d'atténuation dynamique de niveau de bruit de la figure 1 ;

la figure 3 représente un second mode de réalisation du dispositif d'atténuateur de niveau de bruit ;

la figure 4 montre les diagrammes de vidéosignaux résultant de chaque étape du traitement.

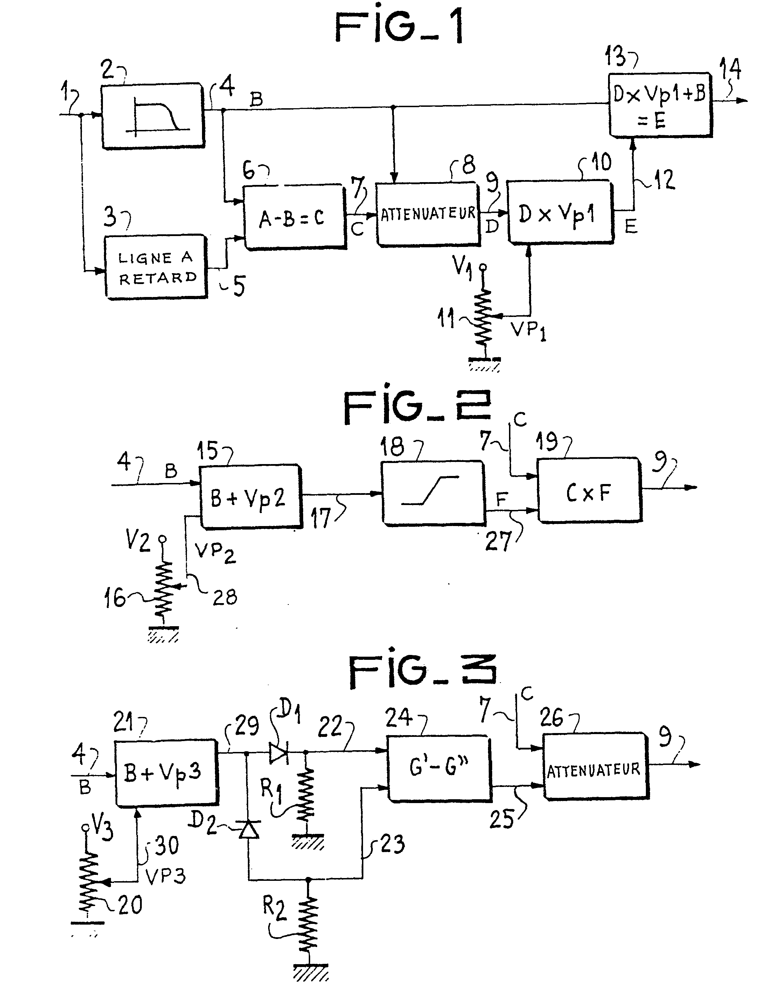

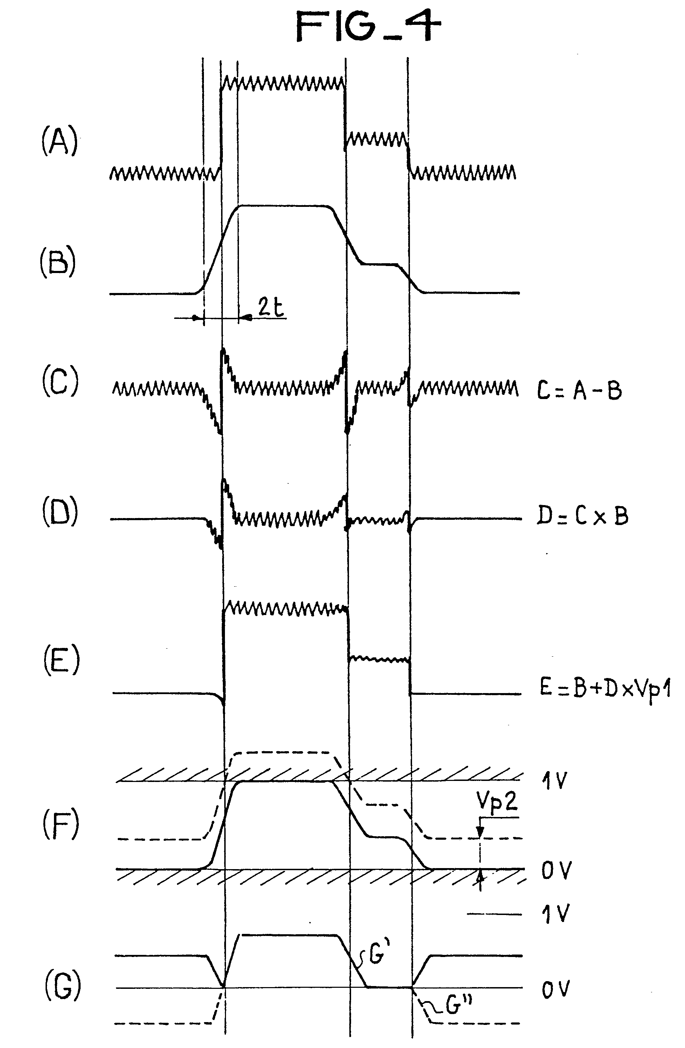

Sur la figure 1, le signal initial, par exemple celui du diagramme A de la figure 4, comportant une transition noir blanc, une transition blanc gris, une transition gris noir et présentant une composante de bruit uniforme, est appliqué sur l'entrée 1 ; cette entrée est reliée à l'entrée d'un filtre 2 délivrant à sa sortie 4 le signal filtré du diagramme B de la figure 4, débarrassé de la composante de bruit mais dont les transitions sont affectées d'un temps de montée et de descente de valeur 2t. Un circuit de différence 6 est relié d'une part, à la sortie 4 du filtre, d'autre part à la sortie 5 d'une ligne à retard 3 de temps de retard t, dont l'entrée est reliée à l'entrée 1 et qui transmet le signal d'entrée en phase avec le signal filtré. Ce circuit de différence 6 délivre sur la sortie 7, le signal de contours A-B, diagramme C de la figure 4. Cette sortie 7 est reliée à une première entrée d'un dispositif d'atténuation dynamique du niveau de bruit 8 qui sera décrit en référence aux figures 2 et 3. Sa seconde entrée est reliée à la sortie 4 du filtre 2.

Ce circuit agit sur le signal de contours et délivre sur sa sortie 9 un signal de contours dans lequel le bruit est supprimé dans les plages correspondant à un niveau privilégié du signal vidéofréquence filtré, le niveau de noir sur le diagramme D de la figure 4, et atténué d'un coefficient variable avec le niveau du signal vidéofréquence filtré pour les autres niveaux de ce signal. Cette sortie 9 est reliée à une entrée d'un amplificateur à gain réglable 10 dont le gain dépend d'une tension de référence $Vp_1$ appliquée à sa seconde entrée et disponible sur le curseur du potentiomètre 11 dont les extrémités sont branchées entre une tension positive continue $V_1$, et la masse. La sortie 12 de cet amplificateur 10 délivre un signal de contours d'amplitude réglable et corrigé en bruit. Cette sortie est reliée à une entrée du circuit d'addition 13 qui est également relié par une autre entrée à la sortie 4 du filtre 2 délivrant le signal filtré. Ce circuit d'addition délivre le signal reconstitué, corrigé en contours et atténué, de manière variable en niveau de bruit en fonction du niveau vidéofréquence, (diagramme E figure 4).

Un mode de réalisation d'atténuation dynamique de bruit est représenté sur la figure 2. L'entrée 7 de ce dispositif, sur laquelle est disponible le signal de contours, est reliée à la première entrée d'un circuit multiplicateur 19. Le circuit multiplie le signal de contours par un signal multiplicateur appliqué à la seconde entrée 27. Ce signal est élaboré à partir du signal filtré appliqué à l'entrée 4 et est disponible sur la sortie 27 d'un circuit écrêteur limiteur 18 dont les seuils limitent le signal à la sortie 27 à des valeurs minimale et maximale correspondant à des coefficients multiplicateurs zéro et un, pour le circuit multiplicateur 19. A toute valeur instantanée de ce signal correspond une atténuation du niveau du signal de contours donc du bruit sur la sortie 9 du multiplicateur, maximale pour la tension correspondant au seuil inférieur de l'écrêteur (soit 0V cette valeur), et minimale pour la tension correspondant au seuil supérieur de l'écrêteur (soit 1V cette valeur). Le signal appliqué à l'entrée 17 de cet écrêteur 18 est issu d'un circuit d'addition 15 qui réalise la somme du signal filtré (supposé compris entre les amplitudes 0 et 1V) appliqué sur son entrée 4 et une tension continue $Vp_2$ appliquée à son entrée 28. Cette tension $Vp_2$ est disponible sur le curseur du potentiomètre 16 dont les extrémités sont alimentées entre une tension positive $V_2 = + 1V$ et la masse. Pour $Vp_2 = 0$, les plages sombres de niveau zéro sur le signal filtré correspondent à des plages atténuées en niveau de bruit et les plages à forte luminosité de niveau 1V qui ne sont pas atténuées conservent le niveau de bruit initial (diagramme D de la figure 4). Pour un signal initial non bruité, la tension $Vp_2$ sera choisie égale à 1V et les contours seront intégralement conservés. La position du signal filtré à la sortie de l'écrêteur est représentée sur le diagramme F en trait plein pour $Vp_2 = 0$, en traits pointillés pour une valeur de $Vp_2$ intermédiaire entre 0 et 1V. Avec une telle valeur intermédiaire le bruit n'est pas atténué dans toute la plage écrêtée à 1V et l'atténuation est forte mais non maximale pour les niveaux correspondant aux plages de noir. Par contre les contours peuvent être mieux conservés.

Dans le mode de réalisation décrit ci-dessus, l'atténuation maximale du niveau de bruit est obtenue pour $Vp_2 = 0$ sur les plages sombres du signal vidéofréquence. Dans certaines applications, il peut être utile de supprimer totalement le bruit dans le signal vidéofréquence sur un autre niveau privilégié, par exemple sur les plages de luminance moyenne.

La figure 3 représente un second mode de réalisation du dispositif d'atténuation dynamique du niveau de bruit prévu dans ce but. Il comporte tous les éléments de la figure 2 assemblés en 26 avec l'entrée 7 du signal de contours et la sortie 9 du même signal atténué en bruit. La deuxième entrée du dispositif 26 identique à celui de la figure 2 n'est plus branchée directement à la sortie 4 du filtre, mais à la sortie 25 d'un circuit de traitement supplémentaire du signal filtré. Ce circuit de traitement comporte un circuit d'addition 21 qui superpose au signal filtré une tension continue $Vp_3$ appliquée à l'entrée 30. Cette tension est disponible sur le curseur du potentiomètre 20 dont les extrémités sont alimentées entre la tension $V_3 = - 1V$ et la masse. A la sortie 29 du circuit d'addition 21, le signal filtré a une valeur nulle pour un niveau de gris du signal vidéofréquence qui dépend de la tension $Vp_3$. Les composantes à luminosité supérieures à ce niveau de gris sont positives (composante G' sur le diagramme G de la figure 4) et transmises par la diode $D_1$ à l'entrée 22 d'un circuit de différence 24 chargée par la résistance $R_1$. Les composantes à luminosité plus sombre que ce niveau de gris seront négatives (composante G'' sur le diagramme G de la figure 4) et transmises par la diose $D_2$ à l'entrée 23 du circuit de différence 24 chargé par la résistance $R_2$. La sortie 25 délivrera au circuit 26 (dispositif de la figure 2) un signal de polarité positive (signal en trait plein sur le diagramme G de la figure 4) dont seul les composantes d'un niveau de gris (pouvant aller du noir au blanc), choisi par réglage du potentiomètre 20, auront une valeur nulle. Ceci permet à l'exploitant de favoriser la diminution du niveau de bruit sur un niveau de gris quelconque, en fonction des besoins d'exploitation. Le dosage de la diminution du bruit est toujours possible par le potentiomètre 16 de la figure 2.

Un tel dispositif mis en œuvre, seul ou en complément avec un dispositif connu tel qu'un écrêteur à seuil, sur des sources d'images telles que caméra, lecteur de diapositives, télécinéma, améliorent par leur souplesse d'utilisation, les conditions d'exploitations, et les possibilités des matériels dans les cas de faible éclairement des scènes télévisées, en réduisant considérablement le bruit dans les zones sombres par exemple en conservant les détails fins.

**Revendications**

1. Dispositif correcteur d'un signal vidéofréquence de télévision par atténuation dynamique du niveau de bruit, comportant un filtre (2) éliminant les composantes hautes fréquences et les composantes de bruit du signal initial pour former un signal filtré, un circuit de différence (6) élaborant un signal de contours par soustraction du signal filtré au signal initial, un circuit d'addition (13) du signal filtré et d'un signal de contours traité pour former un signal reconstitué corrigé, caractérisé en ce que le signal de contours, est appliqué à l'entrée de signal (7) d'un dispositif d'atténuation dynamique de bruit (8) comportant une entrée de signal filtré reliée à la sortie (4) du filtre (2), ce circuit délivrant sur sa sortie (9) un signal traité en bruit par atténuation variable avec le niveau du signal vidéofréquence filtré entre une atténuation maximale réglable pour un niveau de gris ou de noir privilégié où le bruit peut être supprimé et une atténuation minimale lorsque le niveau de luminance du signal vidéofréquence atteint une amplitude maximum déterminée.

2. Dispositif correcteur d'un signal vidéofréquence de télévision selon la revendication 1, caractérisé en ce que le dispositif d'atténuation dynamique du bruit (8) comporte un multiplicateur analogique (19), l'entrée de signal de contours (7) étant reliée à une première entrée de ce multiplicateur et l'entrée de signal filtré étant couplée à une seconde entrée de ce multiplicateur par un circuit de traitement comportant un circuit de décalage de niveau (15, 16) et un circuit écrêteur (18) dont les limites supérieure et inférieure correspondent aux facteurs multiplicatifs 0 et 1, ce circuit de traitement permettant de doser l'atténuation maximale sur le niveau privilégié.

3. Dispositif correcteur d'un signal vidéofréquence de télévision selon la revendication 2, caractérisé en ce que pour une atténuation maximale sur un niveau privilégié différent du niveau de noir, le circuit de couplage comporte en outre entre l'entrée de signal filtré et le circuit de décalage de niveau (15, 16), un circuit de traitement supplémentaire comportant un second circuit de décalage de niveau (20, 21) ramenant à 0V le niveau privilégié choisi, et un circuit de redressement (24), le niveau privilégié étant ainsi choisi sur l'échelle de gris de l'image.

4. Dispositif correcteur d'un signal vidéofréquence selon l'une des revendications précédentes, caractérisé en ce qu'il comporte en outre des moyens de traitement supplémentaires du signal de contours par écrêtage de seuil et dosage d'amplitude (10, 11).

5. Source d'images, caractérisée en ce qu'elle comporte un dispositif d'atténuation dynamique de bruit selon l'une quelconque des revendications 1 à 4.

## Claims

1. Device for correcting a television video frequency signal by dynamic attenuation of the noise level, comprising a filter (2) eliminating the high frequency components and the noise components of the initial signal to form a filtered signal, a difference circuit (6) generating a contour signal by subtraction of the filtered signal from the initial signal, a circuit (13) for adding the filtered signal to a processed contour signal to form a corrected restored signal, characterized in that the contour signal is applied to the signal input (7) of a dynamic noise attenuation device (8) comprising a filtered signal input connected to the output (4) of the filter (2), this circuit supplying on its output (9) a signal which is noise processed by an attenuation varying with the level of the filtered video frequency signal between a maximum attenuation which is adjustable for a privileged gray or black level where the noise can be eliminated and a minimum attenuation when the luminance level of the video frequency signal reaches a determined maximum amplitude.

2. Device for correcting a television video frequency signal according to claim 1, characterized in that the dynamic noise attenuation device (8) comprises an analog multiplier (19), the contour signal input (7) being connected to a first input of this multiplier and the filtered signal input being coupled to a second input of this multiplier through a processing circuit comprising a level shifting circuit (15, 16) and a limiter circuit (18) the upper and lower limits of which correspond to the multiplication factors 0 and 1, this processing circuit permitting to determine the maximum attenuation at the privileged level.

3. Device for correcting a television video frequency signal according to claim 2, characterized in that, for a maximum attenuation at the privileged level which is different from the black level, the coupling circuit further comprises between the filtered signal input and the level shifting circuit (15, 16) an additional processing circuit comprising a second level shifting circuit (20, 21) restoring the selected privileged level to 0V, and a rectifier circuit (24), the privileged level thus being selected on the gray scale of the image.

4. Device for correcting a video frequency signal according to any of the preceding claims, characterized in that it further comprises additional means for processing the contour signal by threshold limitation and amplitude determination (10, 11).

5. Image source, characterized in that it comprises a dynamic noise attenuation device according to any of claims 1 to 4.

## Ansprüche

1. Vorrichtung zum Korrigieren eines Fernseh-Videofrequenzsignals durch dynamische Dämpfung des Rauschpegels, mit einem Filter (2), welches die Hochfrequenzkomponenten und die Rauschkomponenten des Anfangssignals eliminiert, um ein gefiltertes Signal zu bilden, einer Differenzschaltung (6), die ein Kontursignal durch Subtraktion des gefilterten Signals von dem Anfangssignal erzeugt, einer Addierschaltung (13) zum Addieren des gefilterten Signals mit einem verarbeiteten Kontursignal zur Bildung eines korrigierten rekonstruierten Signals, dadurch gekennzeichnet, daß das Kontursignal an den Signaleingang (7) einer dynamischen Rauschdämpfungsvorrichtung (8) angelegt ist, die einen Eingang für das gefilterte Signal umfaßt, welcher mit dem Ausgang (4) des Filters (2) verbunden ist, wobei diese Schaltung an ihrem Ausgang (9) ein Signal abgibt, das in bezug auf Rauschen behandelt ist durch eine mit dem Pegel des gefilterten Videofrequenzsignals variierende Dämpfung, die zwischen einer maximalen Dämpfung, welche für einen privilegierten Grau- oder Schwarzwertpegel einstellbar ist, bei dem das Rauschen unterdrückt werden kann, und einer minimalen Dämpfung, wenn der Luminanzpegel des Videofrequenzsignals eine bestimmte maximale Amplitude erreicht, variiert.

2. Vorrichtung zum Korrigieren eines Fernseh-Videofrequenzsignals nach Anspruch 1, dadurch gekennzeichnet, daß die dynamische Rauschdämpfungsvorrichtung (8) einen Analogmultiplizierer (19) umfaßt, wobei der Kontursignaleingang (7) mit einem ersten Eingang dieses Multiplizierers verbunden ist und der Eingang für das gefilterte Signal an einen zweiten Eingang dieses Multiplizierers über eine Verarbeitungsschaltung angekoppelt ist, die eine Pegelversetzungsschaltung (15, 16) und eine Begrenzerschaltung (18) umfaßt, deren obere und untere Grenze dem Multiplikationsfaktor 0 bzw. 1 entspricht, wobei diese Verarbeitungsschaltung die Bemessung der maximalen Dämpfung für den privilegierten Pegel ermöglicht.

3. Vorrichtung zum Korrigieren eines Fernseh-Videofrequenzsignals nach Anspruch 2, dadurch gekennzeichnet, daß für eine maximale Dämpfung bei einem privilegierten Pegel, der von dem Schwarzwert verschieden ist, die Koppelschaltung ferner zwischen dem Eingang für das gefilterte Signal und der Pegelversetzungsschaltung (15, 16) eine weitere Verarbeitungsschaltung umfaßt, die eine zweite Pegelversetzungsschaltung (20, 21) enthält, welche den gewählten privilegierten Pegel auf 0 versetzt, und eine Gleichrichterschaltung (24) besitzt, wobei der privilegierte Pegel dann innerhalb der Grauabstufung des Bildes gewählt ist.

4. Vorrichtung zum Korrigieren eines Videofrequenzsignals nach einem der vorstehenden Ansprüche, dadurch gekennzeichnet, daß sie ferner zusätzliche Mittel zur Verarbeitung des Kontursignals durch Schwellwertbegrenzung und Amplitudenbemessung (10, 11) umfaßt.

5. Bildquelle, dadurch gekennzeichnet, daß sie eine dynamische Rauschdämpfungsvorrichtung nach einem der Ansprüche 1 bis 4 umfaßt.

# FIG_1

# FIG_2

# FIG_3

1

# FIG_4

(A)

(B)

$2t$

(C)    $C = A - B$

(D)    $D = C \times B$

(E)

$E = B + D \times Vp1$

1 V

$Vp2$

(F)

0 V

1 V

(G)    $G'$

0 V

$G''$